# EUROPEAN PATENT SPECIFICATION

(11) **EP 4 250 512 B1**
(45) Date of publication and mention of the grant of the patent: **26.02.2025**
(21) Application number: 23163714.1
(22) Date of filing: 23.03.2023
(51) Int. Cl.: H02J 3/16, H02J 3/38, H02J 3/32

(54) **POWER ALLOCATION METHOD AND APPARATUS**
LEISTUNGSZUWEISUNGSVERFAHREN UND -VORRICHTUNG
PROCÉDÉ ET APPAREIL D'ATTRIBUTION DE PUISSANCE

(30) Priority: 24.03.2022 CN 202210303775
(43) Date of publication of application: 27.09.2023
(73) Proprietor: Huawei Digital Power Technologies Co., Ltd., Shenzhen, 518043 (CN)
(72) Inventor: DONG, Mingxuan, 518043 Shenzhen (CN); ZHOU, Jiuyang, 518043 Shenzhen (CN); ZHANG, Meiqing, 518043 Shenzhen (CN); XIN, Kai, 518043 Shenzhen (CN)
(74) Representative: Körber, Martin Hans

(56) References cited:
- CN-A- 114 696 330
- US-A1- 2019 363 543
- HAN YANG ET AL: "Review of Active and Reactive Power Sharing Strategies in Hierarchical Controlled Microgrids", IEEE TRANSACTIONS ON POWER ELECTRONICS, INSTITUTE OF ELECTRICAL AND ELECTRONICS ENGINEERS, USA, vol. 32, no. 3, 1 March 2017 (2017-03-01), pages 2427 - 2451, XP011636441, ISSN: 0885-8993, [retrieved on 20161209], DOI: 10.1109/TPEL.2016.2569597

## Description

### TECHNICAL FIELD

This application relates to the field of control technologies of a power conditioning system, and in particular, to a power allocation method and apparatus.

### BACKGROUND

Currently, power allocation is performed on a plurality of power conditioning systems (PCS) through reactive-voltage droop control in an operation process of distributed networking. When a large line impedance difference exists between the plurality of PCSs, a PCS with a small line impedance bears a larger load power. Consequently, power allocation among the plurality of PCSs is uneven.

In the conventional technologies, a virtual impedance is constructed to compensate for the line impedance difference between the plurality of PCSs, to implement even power allocation among the plurality of PCSs. A method for constructing a virtual impedance is obtaining a line impedance value of each PCS, and performing virtual construction of different line impedances for the PCSs. However, it is difficult to implement this method in actual operation of distributed networking. Another method for constructing a virtual impedance is constructing a line impedance value that is far greater than the line impedance difference between the plurality of PCSs. In this case, the line impedance difference between the plurality of PCSs may be ignored. However, constructing a large virtual impedance causes a problem of unstable operation of distributed networking, causes a large drop of a voltage of a micro grid when a load fluctuates, and further causes a fault ride through of a current source device in the micro grid. In addition, a power loss protection phenomenon occurs for some devices due to reduction of electric power quality.

As a result, a problem of uneven power allocation among the plurality of PCSs when the large line impedance difference exists between the plurality of PCSs cannot be resolved merely through constructing the virtual impedance.

US 2019/363543 A1 discloses an adaptive control system technique generally related to distributed energy resources (DERs) located in distribution circuits by setting active and reactive power setpoint values on a power converter.

HAN YANG ET AL: "Review of Active and Reactive Power Sharing Strategies in Hierarchical Controlled Microgrids", IEEE TRANSACTIONS ON POWER ELECTRONICS, vol. 32, no. 3, March 2017 discloses the adaptive/improved droop control, network-based control methods, and cost-based droop schemes for active power sharing.

CN 114 696 330 A discloses a power distribution method and device, and aims at any energy storage converter in a plurality of energy storage converters. In an energy storage converter controller, different weight values are respectively sent to a reactive power-voltage droop control module, a micro-grid controller and a reactive power-voltage differential droop control module according to the output voltage and the output current of an energy storage converter in order to evenly distribute the power of each energy storage converter when the plurality of energy storage converters have a large line impedance difference value.

### SUMMARY

In view of this, this application provides a power allocation method and apparatus, to ensure even power allocation among a plurality of PCSs when a large line impedance difference exists between the plurality of PCSs.

The present invention provides a power allocation apparatus according to claim 1.

In the conventional technologies, when a problem of uneven power allocation among a plurality of PCSs exists because a large line impedance difference exists between the plurality of PCSs, a virtual impedance is constructed to compensate for the line impedance difference between the plurality of PCSs, to implement even power allocation among the plurality of PCSs. However, it is difficult to implement a process of performing virtual construction of different line impedances for the PCSs. In addition, constructing a line impedance value far greater than the line impedance difference between the plurality of PCSs causes a problem of unstable operation of distributed networking. Therefore, in this embodiment of this application, for any one of the plurality of PCSs, first, the power conditioning system controller determines to send the first weight to the reactive-voltage droop control module, send the second weight to the micro grid controller, and send the third weight to the reactive-voltage differential droop control module based on an output voltage and an output current of the PCS; then, the reactive-voltage droop control module obtains the first reference value of the power of the PCS based on the first weight and the collected voltage value of the output voltage of the PCS; the micro grid controller obtains the second reference value of the power of the PCS based on the collected voltage value of the output voltage of the busbar and the second weight; the reactive-voltage differential droop control module obtains the third reference value of the power of the PCS based on the third weight and the voltage value change rate that is determined based on the voltage values that are of the output voltage of the PCS and that are collected at different moments; and finally, the power conditioning system controller determines the value of the power of the PCS based on the first reference value, the second reference value, and the third reference value. In other words, in this application, different weights are respectively allocated to the reactive-voltage droop control module that collects the voltage value of the output voltage of the PCS, the micro grid controller that collects the voltage value of the output voltage of the busbar, and the reactive-voltage differential droop control module that collects the voltage value of the output voltage of the PCS at different moments and determines the voltage value change rate, so that power allocation can still be evenly performed on each PCS when a large line impedance difference exists between a plurality of PCSs.

In a possible design, the power conditioning system controller includes a virtual excitation module, a voltage control module, and a signal driven module. The voltage control module is separately connected to the virtual excitation module and the signal driven module. The virtual excitation module is configured to: determine a fourth reference value of the power of the first power conditioning system based on the first reference value, the second reference value, and the third reference value; and determine an amplitude voltage reference value of the first power conditioning system based on the fourth reference value. The voltage control module is configured to determine a pulse width modulation signal based on the amplitude voltage reference value of the first power conditioning system. The signal driven module is configured to determine the value of the power of the first power conditioning system based on the pulse width modulation signal. In this embodiment of this application, the value of the power of the PCS is determined based on the pulse width modulation signal obtained based on the amplitude voltage reference value of the PCS, so that the obtained power of the PCS is more accurate.

In a possible design, when the first power conditioning system is in a transient state, the third weight is greater than the first weight, and the first weight is greater than the second weight. When the first power conditioning system is in a steady state, the second weight is greater than the third weight, and the third weight is greater than the first weight. In this embodiment of this application, the weights respectively corresponding to the reactive-voltage droop control module, the micro grid controller, and the reactive-voltage differential droop control module are dynamically adjusted based on different cases in which the PCS is in the transient state or the steady state, so that power allocation can still be evenly performed on each PCS when a large line impedance difference exists between the plurality of PCSs.

In a possible design, the apparatus further includes a voltage providing unit. The voltage providing unit is separately connected to the reactive-voltage droop control module and the micro grid controller. The voltage providing unit is configured to provide a voltage for the reactive-voltage droop control module and/or the micro grid controller. The voltage value of the output voltage that is of the first power conditioning system and that is in the reactive-voltage droop control module is adjusted based on a voltage value of the voltage provided by the voltage providing unit for the reactive-voltage droop control module, so that the obtained first reference value of the power of the first power conditioning system is more accurate; and/or the voltage value of the output voltage of the busbar in the micro grid controller is adjusted based on a voltage value of the voltage provided by the voltage providing unit for the micro grid controller, so that the obtained second reference value of the power of the first power conditioning system is more accurate.

In a possible design, the reactive-voltage droop control module includes a first sampling unit and a first calculation unit. The first sampling unit is configured to collect the voltage value of the output voltage of the first power conditioning system. The first calculation unit is configured to: obtain a first voltage value of the voltage provided by the voltage providing unit; determine a second voltage value based on the voltage value of the output voltage of the first power conditioning system and the first voltage value; and determine the first reference value of the power of the first power conditioning system based on the second voltage value and the first weight.

In this embodiment of this application, the voltage value that is of the output voltage of the first power conditioning system and that is collected by the first sampling unit is adjusted based on the obtained first voltage value of the voltage provided by the voltage providing unit, to obtain the precise first reference value of the power of the first power conditioning system, so that the obtained power of the PCS is more accurate.

In a possible design, the micro grid controller includes a second sampling unit and a second calculation unit. The second sampling unit is configured to collect the voltage value of the output voltage of the busbar. The second calculation unit is configured to: obtain a third voltage value of the voltage provided by the voltage providing unit; determine a fourth voltage value based on the voltage value of the output voltage of the busbar and the third voltage value; and determine the second reference value of the power of the first power conditioning system based on the fourth voltage value and the second weight.

In this embodiment of this application, the voltage value that is of the output voltage of the busbar and that is collected by the second sampling unit is adjusted based on the obtained third voltage value of the voltage provided by the voltage providing unit, to obtain the precise second reference value of the power of the first power conditioning system, so that the obtained power of the PCS is more accurate.

The present invention provides a power allocation method according to claim 8.

In a possible design, the determining a value of the power of the first power conditioning system based on the first reference value, the second reference value, and the third reference value includes: determining a fourth reference value of the power of the first power conditioning system based on the first reference value, the second reference value, and the third reference value; and determining an amplitude voltage reference value of the first power conditioning system based on the fourth reference value; determining a pulse width modulation signal based on the amplitude voltage reference value of the first power conditioning system; and determining the value of the power of the first power conditioning system based on the pulse width modulation signal.

In a possible design, when the first power conditioning system is in a transient state, the third weight is greater than the first weight, and the first weight is greater than the second weight.

In a possible design, when the first power conditioning system is in a steady state, the second weight is greater than the third weight, and the third weight is greater than the first weight.

According to an example not covered by the appended claims, this application provides a computer-readable storage medium. The computer-readable storage medium stores a computer instruction. When the computer instruction is executed by a power conditioning system controller in a power allocation apparatus, the power conditioning system controller is enabled to perform the method in any design in the second aspect.

According to an example not covered by the appended claims, this application provides a computer program product. The computer program product includes a computer instruction. When the computer instruction is executed by a power conditioning system controller in a power allocation apparatus, the power conditioning system controller is enabled to perform the method in any design in the second aspect.

### BRIEF DESCRIPTION OF DRAWINGS

FIG. 1 is a schematic diagram of a partial structure of power allocation in the conventional technologies;
FIG. 2 is a schematic diagram of a structure of a power allocation apparatus according to an embodiment of this application;
FIG. 3 is a schematic diagram of an example of a structure of a power allocation apparatus according to an embodiment of this application;
FIG. 4 is a schematic diagram of allocation results of an active power and a reactive power for a plurality of PCSs through merely reactive-voltage droop control in the conventional technologies and by using a power allocation apparatus in this application according to an embodiment of this application;
FIG. 5 is a schematic diagram of a photovoltaic energy storage direct-current coupling structure of an ESS according to an embodiment of this application;
FIG. 6 is a schematic diagram of an energy storage direct-current coupling structure of an ESS according to an embodiment of this application; and
FIG. 7 is a schematic flowchart of a power allocation method according to an embodiment of this application.

### DESCRIPTION OF EMBODIMENTS

To make a person of ordinary skill in the art better understand the technical solutions in this application, the following clearly and fully describes the technical solutions in embodiments of this application with reference to the accompanying drawings.

It should be noted that, the terms "first", "second", and so on in the specification, claims, and accompanying drawings of this application are intended to distinguish between similar objects but do not necessarily indicate a specific order or sequence. It should be understood that data termed in such a way is interchangeable in proper circumstances, so that embodiments of this application described herein can be implemented in other orders than the order illustrated or described herein. Implementations described in the following example embodiments do not represent all implementations consistent with this application. On the contrary, they are merely examples of apparatuses and methods that are described in the appended claims in detail and that are consistent with some aspects of this application.

The following describes some terms in embodiments of this application, to facilitate understanding of a person skilled in the art.
(1) In embodiments of this application, the term "a plurality of" indicates two or more, and other quantifiers are similar to this.
(2) A power conditioning system (PCS) can control charging and discharging of a battery to perform conversion between an alternating current and a direct current. In an on-grid mode, when the PCS is run in a current source mode, the PCS may detect frequency and phase information of a voltage of a power grid in which the PCS is located, to control an output current. In this case, an internal impedance feature of the PCS is reflected as a high impedance. In an off-grid mode, when the PCS is run in a voltage source mode, the PCS may determine frequency, amplitude, and phase information of an output voltage, to control the output voltage. In this case, an internal impedance feature of the PCS is reflected as a low impedance.
(3) Reactive-voltage is also referred to as reactive power-alternating-current voltage. According to an inductive power angle feature of a virtual synchronous generator, it can be determined that the reactive power is strongly correlated with an amplitude of the alternating-current voltage. In other words, an approximate linear relationship exists between the reactive power and the amplitude of the alternating-current voltage. This is generally represented by Q-U.
(4) Reactive-voltage droop control: The reactive-voltage droop control can be constructed based on the approximate linear relationship between the reactive power and the amplitude of the alternating-current voltage. Through the reactive-voltage droop control, power allocation can still be evenly performed on each PCS when a small line impedance difference exists between the plurality of PCSs.
(5) Micro grid controller (MGC): After the MGC collects a voltage value of an output voltage of a busbar, a voltage amplitude and a frequency of the output voltage of the busbar may be adjusted to obtain a specified rated voltage amplitude and a rated frequency.
(6) Reactive-voltage differential: When a line impedance difference exists between components in distributed networking, although voltage amplitudes of different components are different after a change in a steady state, voltage change rates of different components are the same, and the voltage change rates are all approximately 0 and are generally represented by Q-dU.
(7) Reactive-voltage differential droop control: The reactive-voltage differential droop control is constructed on a basis that a reactive-voltage differential of a component in a circuit in the steady state is approximately 0. Through the reactive-voltage differential droop control, power allocation can still be evenly performed on each PCS when a large line impedance difference exists between the plurality of PCSs.
(8) A transient state indicates a process in which a voltage in an alternating-current circuit is switched from a steady state to another steady state when a load in the circuit changes.
(9) The steady state is defined relative to the transient state. After an original state of the circuit changes due to a voltage jump in a component, a voltage and a current in the circuit change with time. A change manner is determined by the component in the circuit. After external adjustment of the component in circuit is stable, the voltage and the current in the circuit tend to be stable. In this case, the component is in the steady state.

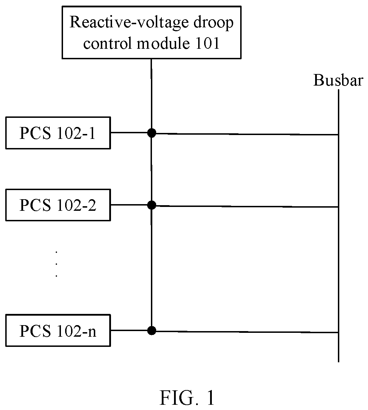

As shown in FIG. 1, a power allocation apparatus in the conventional technologies includes a reactive-voltage droop control module 101. In an operation process of distributed networking, for a plurality of PCSs (for example, a PCS 102-1, a PCS 102-2, ..., and a PCS 102-n in FIG. 1), power allocation is performed on the PCS 102-1, the PCS 102-2, ..., and the PCS 102-n by using the reactive-voltage droop control module 101. When a large line impedance difference exists between the PCS 102-1, the PCS 102-2, ..., and the PCS 102-n, a PCS with a small line impedance bears a larger load power, causing uneven power allocation among the PCS 102-1, the PCS 102-2, ..., and the PCS 102-n.

Currently, a virtual impedance is constructed to compensate for the line impedance difference between the plurality of PCSs, to implement even power allocation among the plurality of PCSs. A method for constructing a virtual impedance is obtaining a line impedance value of each PCS, and performing virtual construction of different line impedances for the PCSs. However, it is difficult to implement this method in actual operation of distributed networking. Another method for constructing a virtual impedance is constructing a line impedance value that is far greater than the line impedance difference between the plurality of PCSs. In this case, the line impedance difference between the plurality of PCSs may be ignored. However, constructing a large virtual impedance causes a problem of unstable operation of distributed networking, causes a large drop of a voltage of a micro grid when a load fluctuates, and further causes a fault ride through of a current source device in the micro grid. In addition, a power loss protection phenomenon occurs for some devices due to reduction of electric power quality. As a result, a problem of uneven power allocation among the plurality of PCSs when the large line impedance difference exists between the plurality of PCSs cannot be resolved merely through constructing the virtual impedance in the conventional solutions.

In view of this, embodiments of this application provide a power allocation method and apparatus. To make objectives, technical solutions, and advantages of this application clearer, the following further describes this application in detail with reference to the accompanying drawings.

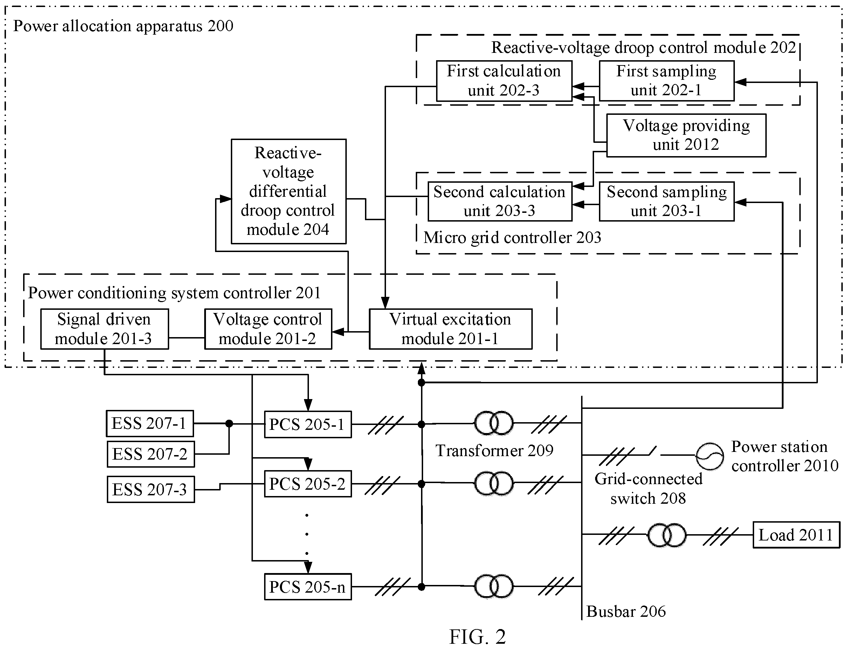

FIG. 2 is a schematic diagram of a structure of a power allocation apparatus according to an embodiment of this application. The power allocation apparatus 200 is configured to perform power allocation on a plurality of PCSs. The power allocation apparatus 200 includes a power conditioning system controller 201, a reactive-voltage droop control module 202, a micro grid controller 203, and a reactive-voltage differential droop control module 204. The PCS 205-1, the PCS 205-2, ..., and the PCS 205-n are separately connected to a busbar 206, the reactive-voltage droop control module 202, and the power conditioning system controller 201. The micro grid controller 203 is connected to the busbar 206. The power conditioning system controller 201 is separately connected to the reactive-voltage droop control module 202, the micro grid controller 203, and the reactive-voltage differential droop control module 204.

The power allocation apparatus may perform power allocation on the PCS 205-1, the PCS 205-2, ..., and the PCS 205-n. The following is described by using an example in which power allocation is performed on the PCS 205-1. The power conditioning system controller 201 determines a first weight, a second weight, and a third weight based on an output voltage and an output current of the PCS 205-1; and sends the first weight to the reactive-voltage droop control module 202, sends the second weight to the micro grid controller 203, and sends the third weight to the reactive-voltage differential droop control module 204.

Optionally, when the power conditioning system controller 201 determines, based on the output voltage and the output current of the PCS 205-1, the first weight to be sent to the reactive-voltage droop control module 202, the second weight to be sent to the micro grid controller 203, and the third weight to be sent to the reactive-voltage differential droop control module 204, if the PCS 205-1 is in a transient state, the third weight is greater than the first weight, and the first weight is greater than the second weight. If the PCS 205-1 is in a steady state, the second weight is greater than the third weight, and the third weight is greater than the first weight. Different weight values are allocated to the reactive-voltage droop control module 202, the micro grid controller 203, and the reactive-voltage differential droop control module 204 when the PCS is in different states. In this way, a problem of inaccurate power allocation to the PCS due to a switching operation between the transient state and the steady state of the PCS in the conventional technologies may not be considered.

In the solutions of this application, when power allocation is performed on each of the plurality of PCSs, different weight values are respectively sent to the reactive-voltage droop control module 202, the micro grid controller 203, and the reactive-voltage differential droop control module 204, to implement even power allocation for the plurality of PCSs, thereby avoiding a problem that a communication speed is limited in a process in which power allocation is evenly performed on the plurality of PCSs by using only the micro grid controller 203.

In addition, in this application, different weight values are respectively sent to the reactive-voltage droop control module 202, the micro grid controller 203, and the reactive-voltage differential droop control module 204, to implement even power allocation for the plurality of PCSs, thereby further resolving a problem of unstable operation of distributed networking when communication disconnection occurs on the micro grid controller 203 in the conventional technologies. In addition, the following problems in the conventional technologies can be resolved: When the PCS is in the transient state, because a PCS with a small line impedance encounters an over loading and current limiting phenomenon due to load fluctuation, distributed networking operates unstably. When the PCS is in the steady state, because a PCS with a small line impedance is over loaded for a long time, a use time of a device in distributed networking is short.

After the power conditioning system controller 201 sends the first weight to the reactive-voltage droop control module 202, the reactive-voltage droop control module 202 may collect a voltage value of the output voltage of the PCS 205-1, and continue to determine a first reference value of a power of the PCS 205-1 based on the voltage value of the output voltage of the PCS 205-1 and the first weight. For example, a product of the voltage value of the output voltage of the PCS 205-1 and the first weight may be used as the first reference value of the power of the PCS 205-1.

Herein, to further improve accuracy of the first reference value of the power of the PCS 205-1, as shown in FIG. 2, the power allocation apparatus may further include a voltage providing unit 2012. The voltage providing unit 2012 is connected to the reactive-voltage droop control module 202. The voltage providing unit 2012 provides a voltage for the reactive-voltage droop control module 202.

For example, a specific process of determining the first reference value of the power of the PCS 205-1 based on the voltage value of the output voltage of the PCS 205-1 and the first weight with reference to the voltage provided by the voltage providing unit 2012 for the reactive-voltage droop control module 202 is as follows: The reactive-voltage droop control module 202 in FIG. 2 may include a first sampling unit 202-1 and a first calculation unit 202-3. The first sampling unit 202-1 is configured to collect the voltage value of the output voltage of the PCS 205-1. The first calculation unit 202-3 is configured to: obtain the first voltage value of the voltage provided by the voltage providing unit 2012; determine a second voltage value based on the voltage value of the output voltage of the PCS 205-1 and the first voltage value; and then continue to determine the first reference value of the power of the PCS 205-1 based on the second voltage value and the first weight. For example, a difference between the voltage value of the output voltage of the PCS 205-1 and the first voltage value is used as the second voltage value, and a product of the second voltage value and the first weight is used as the first reference value of the power of the PCS 205-1.

After the power conditioning system controller 201 sends the second weight to the micro grid controller 203, the micro grid controller 203 collects the voltage value of the output voltage of the busbar 206, and continues to determine the second reference value of the power of the PCS 205-1 based on the voltage value of the output voltage of the busbar 206 and the second weight. For example, a product of the voltage value of the output voltage of the busbar 206 and the second weight may be used as the second reference value of the power of the PCS 205-1.

Similarly, to further improve accuracy of the second reference value of the power of the PCS 205-1, as shown in FIG. 2, the voltage providing unit 2012 is connected to the micro grid controller 203, so that the voltage providing unit 2012 provides a voltage for the micro grid controller 203.

For example, a specific process of determining the second reference value of the power of the PCS 205-1 based on the voltage value of the output voltage of the busbar 206 and the second weight with reference to the voltage provided by the voltage providing unit 2012 for the micro grid controller 203 is as follows: The micro grid controller 203 in FIG. 2 may include a second sampling unit 203-1 and a second calculation unit 203-3. The second sampling unit 203-1 is configured to collect the voltage value of the output voltage of the busbar 206. The second calculation unit 203-3 is configured to: obtain a third voltage value of the voltage provided by the voltage providing unit 2012; determine a fourth voltage value based on the voltage value of the output voltage of the busbar 206 and the third voltage value; and then continue to determine the second reference value of the power of the first power conditioning system based on the fourth voltage value and the second weight. For example, a difference between the voltage value of the output voltage of the busbar 206 and the third voltage value is used as the fourth voltage value, and a product of the fourth voltage value and the second weight is used as the second reference value of the power of the PCS 205-1.

Herein, the first voltage value and the third voltage value of the voltage provided by the voltage providing unit 2012 may be the same voltage value, or may be different voltage values. This is merely an example for description herein. Details may be adjusted according to an actual case.

After the power conditioning system controller 201 sends the third weight to the reactive-voltage differential droop control module 204, the reactive-voltage differential droop control module 204 collects the voltage value of the output voltage of the PCS 205-1; then determines a voltage value change rate of the output voltage of the PCS 205-1 based on the voltage values that are of the output voltage of the PCS 205-1 and that are collected at different moments; and further determines a third reference value of the power of the PCS 205-1 based on the voltage value change rate and the third weight. For example, a product of the voltage value change rate and the third weight may be used as the third reference value of the power of the PCS 205-1.

Finally, the power conditioning system controller 201 determines a value of the power of the PCS 205-1 based on the first reference value, the second reference value, and the third reference value, and performs even power allocation on each PCS after a value of a power of each PCS is determined. Specifically, as shown in FIG. 2, the power conditioning system controller 201 may include a virtual excitation module 201-1, a voltage control module 201-2, and a signal driven module 201-3. The voltage control module 201-2 is separately connected to the virtual excitation module 201-1 and the signal driven module 201-3.

For example, first, the virtual excitation module 201-1 uses an addition result of the first reference value, the second reference value, and the third reference value as a fourth reference value of the power of the PCS 205-1, and then performs virtual excitation processing on the fourth reference value to obtain an amplitude voltage reference value of the PCS 205-1. Then, the voltage control module 201-2 determines a pulse width modulation signal based on the amplitude voltage reference value of the PCS 205-1. Further, to more accurately obtain the pulse width modulation signal, the pulse width modulation signal may be further determined with reference to the amplitude voltage reference value of the PCS 205-1 and a phase voltage reference value of the PCS 205-1. Finally, the signal driven module 201-3 determines the value of the power of the PCS 205-1 based on the pulse width modulation signal. Herein, a process of determining the pulse width modulation signal and a process of determining the value of the power of the PCS 205-1 based on the pulse width modulation signal are described in detail in subsequent examples. Details are not described herein again.

Therefore, the foregoing describes an architecture process in which the power allocation apparatus performs even power allocation on the plurality of PCSs. The following describes a power allocation process by using a specific example. In addition, in FIG. 2, in addition to a structure of the power allocation apparatus, another structure in distributed networking is described below. Details are not described herein.

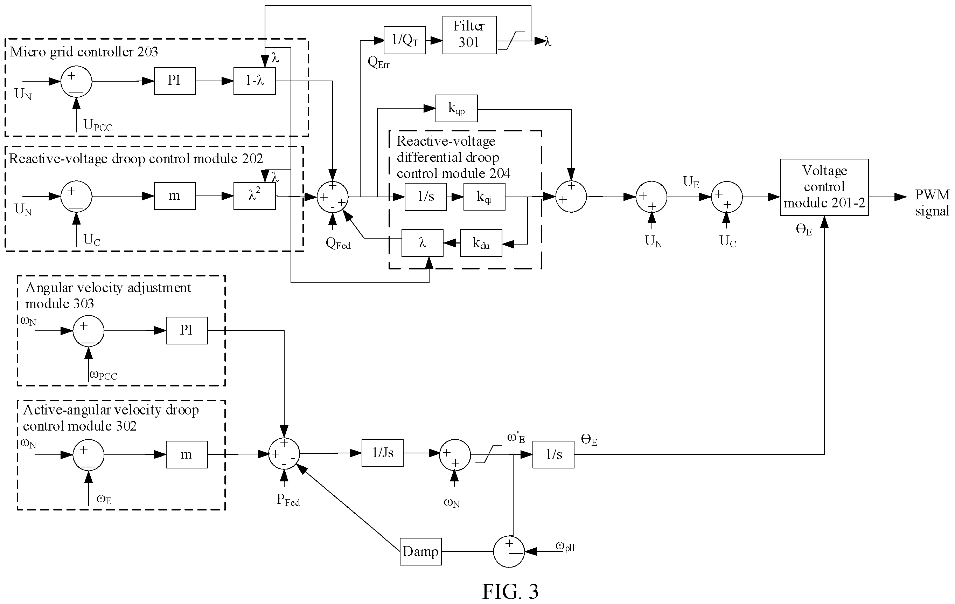

With reference to FIG. 3, the following describes the reactive-voltage droop control module 202. For the reactive-voltage droop control module 202, the voltage value that is of the output voltage of the PCS 205-1 and that is collected by the first sampling unit 202-1 may be represented by Uc, and the first voltage value output by the voltage providing unit 2012 may be represented by U_{N}. The first calculation unit 202-3 uses a difference between Uc and U_{N} as the second voltage value, performs multiplication processing on the second voltage value and a specified coefficient (for example, a droop coefficient m), and then determines the first reference value of the power of the PCS 205-1 based on the processed second voltage value and the first weight (represented by λ²). The first weight is determined based on the output voltage and the output current of the PCS 205-1.

Then, the micro grid controller 203 is further described. It can be learned from the foregoing description that, for the micro grid controller 203, the voltage value that is of the output voltage of the busbar 206 and that is collected by the second sampling unit 203-1 may be represented by U_{PCC}, and the third voltage value output by the voltage providing unit 2012 is the same as the first voltage value output by the voltage providing unit 2012 and may also be represented by U_{N}. The second calculation unit 203-3 uses the difference between U_{PCC} and U_{N} as the fourth voltage value, then performs proportional integral (PI) processing on the fourth voltage value, and further determines the second reference value of the power of the PCS 205-1 based on the fourth voltage value after the PI processing and the second weight (represented by 1-λ). The second weight is determined based on the output voltage and the output current of the PCS 205-1.

The following describes the reactive-voltage differential droop control module 204. It can be learned from the foregoing description that, for the reactive-voltage differential droop control module 204, the virtual excitation module 201-1 performs virtual excitation processing (for example, an integrator of the virtual excitation module 201-1 is represented by 1/s, and k_{qi} is a fixed coefficient). If no balance point is determined for a reactive power in an output result after the virtual excitation processing, self-balancing processing may be further performed by using a specified coefficient (for example, a fixed coefficient k_{du}), so that a balance point is determined for the reactive power. Finally, after the balance point is determined, the third reference value of the power of the PCS 205-1 is determined with reference to the third weight (represented by λ). The third weight is determined based on the output voltage and the output current of the PCS 205-1.

For example, when the PCS 205-1 is in the transient state, because an error value of the reactive power is large, a value of λ is infinitely close to 1. In this case, a value of λ² is also infinitely close to 1, and a value of 1-λ is infinitely close to 0. Because the value of λ is greater than the value of λ², when the PCS 205-1 is in the transient state, the third weight received by the reactive-voltage differential droop control module 204 plays a primary role in power adjustment, the first weight received by the reactive-voltage droop control module 202 plays a secondary role in power adjustment, and the second weight received by the micro grid controller 203 almost does not play any role in power adjustment.

When the PCS 205-1 is in the steady state, because the error value of the reactive power is small, the value of λ is infinitely close to 0. In this case, the value of λ² is also infinitely close to 0, and the value of 1-λ is infinitely close to 1. Therefore, when the PCS 205-1 is in the steady state, the second weight received by the micro grid controller 203 plays a primary role in power adjustment, and the third weight received by the reactive-voltage differential droop control module 204 and the first weight received by the reactive-voltage droop control module 202 almost do not play any role in power adjustment. This is merely an example for description. Specific value requirements for the first weight, the second weight, and the third weight are not limited in this application, and may be adjusted according to an actual case.

Optionally, after separately determining the first reference value, the second reference value, and the third reference value of the power of the PCS 205-1, the power conditioning system controller 201 in the power allocation apparatus 200 may further separately perform addition processing on the first reference value, the second reference value, and the third reference value, and continue to obtain a difference with a reactive power feedback (for example, Q_{Fed}). The difference is represented by Q_{Err}. Then, per-unit processing is performed on Q_{Err}. For example, Q_{Err} is multiplied by 1/Q_{T} (Q_{T} is a fixed coefficient); then, normalization processing is performed; and filtering processing performed by a filter 301 is further performed, to obtain the updated first weight, second weight, and third weight.

The first reference value, the second reference value, and the third reference value of the power of the PCS 205-1 are determined again based on the updated first weight, second weight, and third weight. Then, addition processing is separately performed on the updated first reference value, second reference value, and third reference value of the power of the PCS 205-1, to obtain the fourth reference value of the power of the PCS 205-1. The virtual excitation module 201-1 performs further processing on the fourth reference value (for example, performs multiplication processing on the fourth reference value and a fixed coefficient k_{qp}), to obtain a first amplitude voltage reference value of an electric potential in a virtual synchronous generator (VSG). Then, addition processing is performed on the first amplitude voltage reference value of the electric potential in the VSG and the first voltage value U_{N}. An addition result may be represented by U_{E}. Then, addition processing is performed on U_{E} and the voltage value Uc of the output voltage of the PCS 205-1, to obtain the amplitude voltage reference value of the PCS 205-1.

After the amplitude voltage reference value of the PCS 205-1 is determined, the following describes a process of determining the phase voltage reference value of the PCS 205-1. An active-angular velocity droop control module 302 collects the voltage value Uc of the output voltage of the PCS 205-1, determines a first angular velocity ω_{E}, and then performs multiplication processing on a specified coefficient (for example, a droop coefficient m) and a difference between ω_{E} and a rated second angular velocity ω_{N}, to obtain a first active power. An angular velocity adjustment module 303 in the micro grid controller 203 determines a fourth angular velocity ω_{PCC} based on the third voltage value U_{N}, and then performs PI processing on a difference between a rated third angular velocity ω_{N} and ω_{PCC}, to obtain a second active power.

A difference is further obtained between an active power feedback P_{Fed} and a result obtained after addition processing is performed on the first active power and the second active power. The difference is used as input of a virtual inertia 1/Js. Then, amplitude limiting processing is performed on an addition result of an output value and the second angular velocity ω_{N}, to obtain an amplitude limited result that is represented by ω'_{E}. Then, integral processing (1/s is used to represent an integral process) is performed on the result obtained after the amplitude limiting processing, to obtain the phase voltage reference value Θ_{E} of the PCS 205-1 . A difference between ω'_{E} and an angular velocity ωₚₗₗ of a phase-locked loop may be further used as input of damping. Output of damping may be used as a feedback value of a damping power.

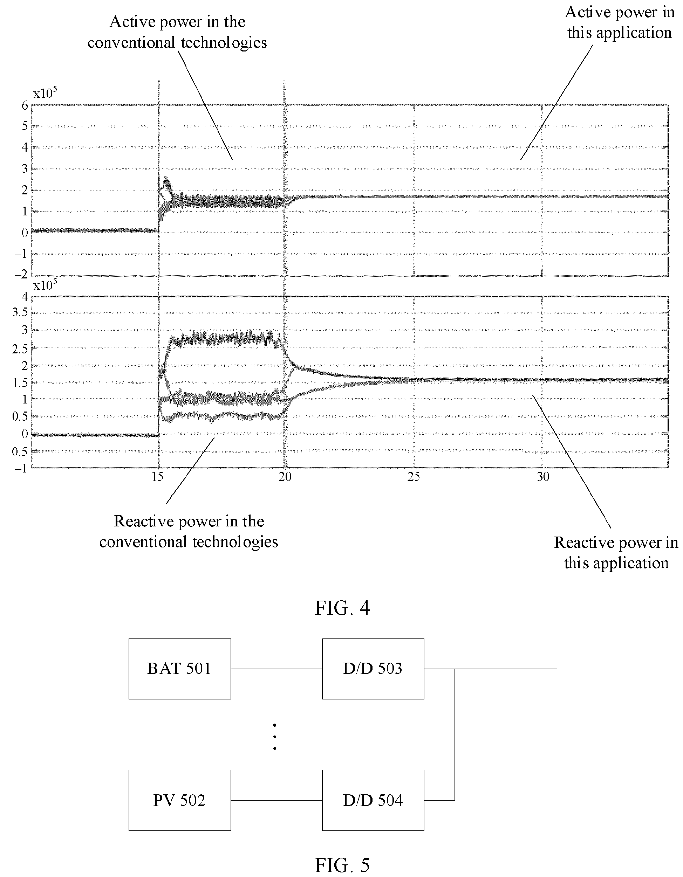

After the phase voltage reference value of the PCS 205-1 and the amplitude voltage reference value of the PCS 205-1 are determined, both the phase voltage reference value of the PCS 205-1 and the amplitude voltage reference value of the PCS 205-1 are used as input of the voltage control module 201-2, to obtain a pulse width modulation (PWM) signal output by the voltage control module 201-2. Then, the value of the power of the PCS 205-1 is determined based on the PWM signal. FIG. 4 is a schematic diagram of allocation results of an active power and a reactive power for a plurality of PCSs through merely reactive-voltage droop control in the conventional technologies and by using a power allocation apparatus in this application.

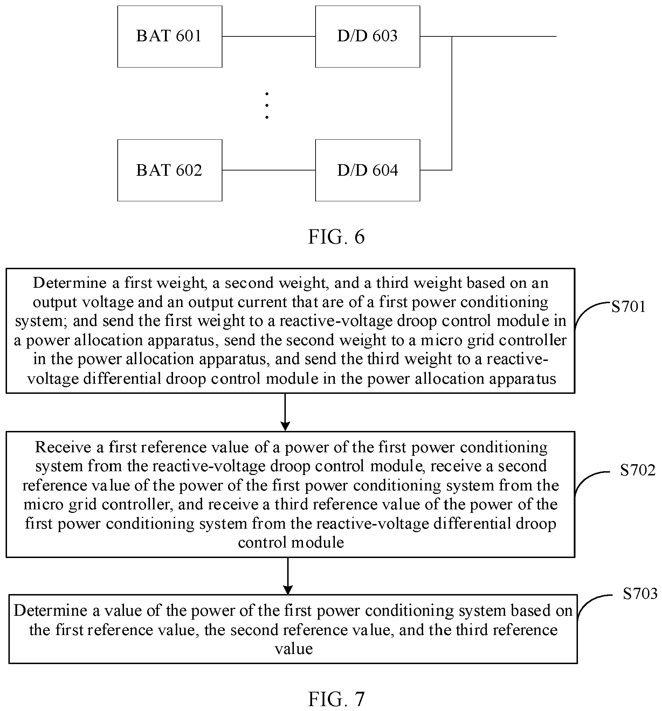

In an embodiment of this application, distributed networking may further include an energy storage system (ESS). The ESS may be connected to a PCS through alternating-current coupling, or may be connected to a PCS through direct-current coupling, or may be connected to a PCS in a point-to-point manner. As shown in FIG. 2, an ESS 207-1 and an ESS 207-2 are connected to a PCS 205-1 through direct-current coupling, and an ESS 207-3 is connected to a PCS 205-2 in a point-to-point manner. The ESS may include structural components such as a photovoltaic (PV) power generation unit, a battery system, a direct current-direct current converter (DC-DC Converter, DID for short), and a battery (battery, BAT for short) component. FIG. 5 is a schematic diagram of a photovoltaic energy storage direct-current coupling structure of an ESS. The ESS includes a BAT 501, a PV 502, a DID 503, and a DID 504. The BAT 501 is connected to the DID 503, the PV 502 is connected to the DID 504, and the DID 503 and the DID 504 may be connected to the PCS 205-1. FIG. 6 is a schematic diagram of an energy storage direct-current coupling structure of an ESS. The ESS includes a BAT 601, a BAT 602, a DID 603, and a DID 604. The BAT 601 is connected to the DID 603, the BAT 602 is connected to the DID 604, and the DID 603 and the DID 604 may also be connected to the PCS 205-1.

In an embodiment of this application, the distributed networking may further include a grid-connected switch 208, a transformer 209, a power station controller 2010, and a load 2011. The PCS 205-1 may be connected to a secondary side of the transformer 209 independently or in alternating-current coupling manner. The transformer 209 is further connected to the busbar 206. The grid-connected switch 208 is separately connected to the busbar 206 and the power station controller 2010. The load 2011 is connected to the transformer.

Optionally, this application is applicable to an application scenario in which power allocation is evenly performed on a plurality of parallel PCSs in a grid-forming (GFM) type, and is also applicable to an application scenario of large-scale energy storage, small-sized and medium-sized distributed energy storage application scenarios, and the like. This is merely an example for description. A specific application scenario is not limited in this application.

Based on the foregoing embodiment of the power allocation apparatus, an embodiment of this application further provides a power allocation method applied to the power allocation apparatus. The method may be performed by the power conditioning system controller 201 in FIG. 2. As shown in FIG. 7, the method provided in this application includes the following steps:

S701: Determine a first weight, a second weight, and a third weight based on an output voltage and an output current of a first power conditioning system; and send the first weight to a reactive-voltage droop control module in the power allocation apparatus, send the second weight to a micro grid controller in the power allocation apparatus, and send the third weight to a reactive-voltage differential droop control module in the power allocation apparatus.

S702: Receive a first reference value of a power of the first power conditioning system from the reactive-voltage droop control module, receive a second reference value of the power of the first power conditioning system from the micro grid controller, and receive a third reference value of the power of the first power conditioning system from the reactive-voltage differential droop control module.

S703: Determine a value of the power of the first power conditioning system based on the first reference value, the second reference value, and the third reference value.

In a possible design, step S703 of determining the value of the power of the first power conditioning system based on the first reference value, the second reference value, and the third reference value includes:
determining a fourth reference value of the power of the first power conditioning system based on the first reference value, the second reference value, and the third reference value; and determining an amplitude voltage reference value of the first power conditioning system based on the fourth reference value;
determining a pulse width modulation signal based on the amplitude voltage reference value of the first power conditioning system; and
determining the value of the power of the first power conditioning system based on the pulse width modulation signal.

In a possible design, when the first power conditioning system is in a transient state, the third weight is greater than the first weight, and the first weight is greater than the second weight.

In a possible design, when the first power conditioning system is in a steady state, the second weight is greater than the third weight, and the third weight is greater than the first weight.

An embodiment of this application not covered by the appended claims further provides a computer-readable storage medium. The computer-readable storage medium stores a computer instruction. When the computer instruction is executed by a power conditioning system controller in a power allocation apparatus, the power allocation method shown in FIG. 7 may be performed.

An embodiment of this application further provides a computer program product including a computer instruction, which is not covered by the appended claims.

When the computer instruction is executed by a power conditioning system controller in a power allocation apparatus, the power allocation method shown in FIG. 7 may be performed.

In other words, each aspect of the power allocation method provided in this application may be further implemented in a form of a program product, such implementation is not covered by the appended claims. The program product includes program code. When the program code is run on a computer device or a circuit product, the program code is used to enable the computer device to perform the steps in the power allocation method described in this specification.

In addition, although the operations of the method in this application are described in a particular order in the accompanying drawings, this does not require or imply that these operations need to be performed in the particular order, or that all the shown operations need to be performed to achieve a desired result. Additionally or optionally, some steps may be omitted, a plurality of steps may be combined into one step for execution, and/or one step may be decomposed into a plurality of steps for execution.

A person skilled in the art should understand that embodiments of this application may be provided as a method, a system, or a computer program product, the latest not being covered by the appended claims. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may be alternatively stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may be alternatively loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the scope of this application which is solely defined by the appended claims. In this way, this application is intended to cover these modifications and variations of this application provided that they fall within the scope of protection defined by the following claims.

## Claims

1. A power allocation apparatus (200) for a plurality of power conditioning systems (205), wherein each of the plurality of power conditioning systems is connected to a busbar (206), and the apparatus comprises a reactive-voltage droop control module (202), a micro grid controller (203), a reactive-voltage differential droop control module (204), and a power conditioning system controller (201);
wherein the reactive-voltage droop control module (202) and the power conditioning system controller (201) is each configured to connect to each power conditioning system, the micro grid controller (203) is configured to connect to the busbar (206), and the power conditioning system controller (201) is configured to separately connect to the reactive-voltage droop control module (202), the micro grid controller (203), and the reactive-voltage differential droop control module (204);
the power conditioning system controller (201) is further configured to: determine a first weight, a second weight, and a third weight based on an output voltage and an output current of a first power conditioning system, wherein the first weight, the second weight, and the third weight is determined based on a parameter λ measuring an error value of the reactive power of the first power conditioning system; and send the first weight to the reactive-voltage droop control module (202), send the second weight to the micro grid controller (203), and send the third weight to the reactive-voltage differential droop control module (204), wherein the first power conditioning system is any one of the plurality of power conditioning systems;
the reactive-voltage droop control module (202) is further configured to: collect a voltage value of the output voltage of the first power conditioning system; and determine a first reference value of a power of the first power conditioning system based on the voltage value of the output voltage of the first power conditioning system and the first weight;
the micro grid controller (203) is further configured to: collect a voltage value of an output voltage of the busbar (206); and determine a second reference value of the power of the first power conditioning system based on the voltage value of the output voltage of the busbar (206) and the second weight;
the reactive-voltage differential droop control module (204) is further configured to: collect the voltage value of the output voltage of the first power conditioning system, and determine a voltage value change rate of the output voltage of the first power conditioning system based on voltage values that are of the output voltage of the first power conditioning system and that are collected at different moments; and determine a third reference value of the power of the first power conditioning system based on the voltage value change rate and the third weight; and
the power conditioning system controller (201) is further configured to determine a value of the power of the first power conditioning system based on the first reference value, the second reference value, and the third reference value.

2. The apparatus according to claim 1, wherein the power conditioning system controller (201) comprises a virtual excitation module (201-1), a voltage control module (201-2), and a signal driven module (201-3), and the voltage control module (201-2) is separately connected to the virtual excitation module (201-2) and the signal driven module (201-3);
the virtual excitation module (201-2) is configured to: determine a fourth reference value of the power of the first power conditioning system based on the first reference value, the second reference value, and the third reference value; and determine an amplitude voltage reference value of the first power conditioning system based on the fourth reference value;
the voltage control module (201-2) is configured to determine a pulse width modulation signal based on the amplitude voltage reference value of the first power conditioning system; and
the signal driven module (201-3) is configured to determine the value of the power of the first power conditioning system based on the pulse width modulation signal.

3. The apparatus according to claim 1 or 2, wherein when the first power conditioning system is in a transient state, the third weight is greater than the first weight, and the first weight is greater than the second weight.

4. The apparatus according to any one of claims 1 to 3, wherein when the first power conditioning system is in a steady state, the second weight is greater than the third weight, and the third weight is greater than the first weight.

5. The apparatus according to any one of claims 1 to 4, wherein the apparatus further comprises a voltage providing unit (2012), and the voltage providing unit (2012) is separately connected to the reactive-voltage droop control module (202) and the micro grid controller (203); and
the voltage providing unit (2012) is configured to provide a voltage for the reactive-voltage droop control module (202) and/or the micro grid controller (203).

6. The apparatus according to claim 5, wherein the reactive-voltage droop control module (202) comprises a first sampling unit (202-1) and a first calculation unit (202-3);
the first sampling unit (202-1) is configured to collect the voltage value of the output voltage of the first power conditioning system; and
the first calculation unit (202-3) is configured to: obtain a first voltage value of the voltage provided by the voltage providing unit (2012); determine a second voltage value based on the voltage value of the output voltage of the first power conditioning system and the first voltage value; and determine the first reference value of the power of the first power conditioning system based on the second voltage value and the first weight.

7. The apparatus according to claim 5 or 6, wherein the micro grid controller (203) comprises a second sampling unit (203-1) and a second calculation unit (203-3);
the second sampling unit (203-1) is configured to collect the voltage value of the output voltage of the busbar (206); and
the second calculation unit (203-3) is configured to: obtain a third voltage value of the voltage provided by the voltage providing unit (2012); determine a fourth voltage value based on the voltage value of the output voltage of the busbar (206) and the third voltage value; and determine the second reference value of the power of the first power conditioning system based on the fourth voltage value and the second weight.

8. A power allocation method for a power conditioning system controller (201) in a power allocation apparatus (200) according to any one of claims 1 to 7, and the method comprises:
determining (701) a first weight, a second weight, and a third weight based on an output voltage and an output current of a first power conditioning system, wherein the first weight, the second weight, and the third weight is determined based on a parameter measuring an error value of the reactive power of the first power conditioning system; and sending the first weight to a reactive-voltage droop control module (202) in the power allocation apparatus (200), sending the second weight to a micro grid controller (203) in the power allocation apparatus (200), and sending the third weight to a reactive-voltage differential droop control module (204) in the power allocation apparatus (200);
receiving (702) a first reference value of a power of the first power conditioning system from the reactive-voltage droop control module (202), receiving a second reference value of the power of the first power conditioning system from the micro grid controller (203), and receiving a third reference value of the power of the first power conditioning system from the reactive-voltage differential droop control module (204); and
determining (703) a value of the power of the first power conditioning system based on the first reference value, the second reference value, and the third reference value.

9. The method according to claim 8, wherein the determining a value of the power of the first power conditioning system based on the first reference value, the second reference value, and the third reference value comprises:
determining a fourth reference value of the power of the first power conditioning system based on the first reference value, the second reference value, and the third reference value; and determining an amplitude voltage reference value of the first power conditioning system based on the fourth reference value;
determining a pulse width modulation signal based on the amplitude voltage reference value of the first power conditioning system; and
determining the value of the power of the first power conditioning system based on the pulse width modulation signal.

10. The method according to claim 8 or 9, wherein when the first power conditioning system is in a transient state, the third weight is greater than the first weight, and the first weight is greater than the second weight.

11. The method according to any one of claims 8 to 10, wherein when the first power conditioning system is in a steady state, the second weight is greater than the third weight, and the third weight is greater than the first weight.

## Patentansprüche

1. Leistungszuweisungsvorrichtung (200) für eine Vielzahl von Leistungskonditionierungssystemen (205), wobei jedes der Vielzahl von Leistungskonditionierungssystemen mit einer Sammelschiene (206) verbunden ist und die Vorrichtung ein Blindspannungsabfallsteuermodul (202), eine Mikronetzsteuerung (203), ein Blindspannungs-Differentialabfall-Steuermodul (204) und eine Leistungskonditionierungssystemsteuerung (201) umfasst;
wobei das Blindspannungsabfallsteuermodul (202) und die Leistungskonditionierungssystemsteuerung (201) jeweils dazu konfiguriert sind, sich mit jedem Leistungskonditionierungssystem zu verbinden, wobei die Mikronetzsteuerung (203) dazu konfiguriert ist, sich mit der Sammelschiene (206) zu verbinden, und die Leistungskonditionierungssystemsteuerung (201) dazu konfiguriert ist, sich separat mit dem Blindspannungsabfallsteuermodul (202), der Mikronetzsteuerung (203) und dem Blindspannungs-Differentialabfall-Steuermodul (204) zu verbinden;
die Leistungskonditionierungssystemsteuerung (201) ferner dazu konfiguriert ist: ein erstes Gewicht, ein zweites Gewicht und ein drittes Gewicht basierend auf einer Ausgangsspannung und einem Ausgangsstrom eines ersten Leistungskonditionierungssystems zu bestimmen, wobei das erste Gewicht, das zweite Gewicht und das dritte Gewicht basierend auf einem Parameter λ, der einen Fehlerwert der Blindleistung des ersten Leistungskonditionierungssystems misst, bestimmt werden; und das erste Gewicht an das Blindspannungsabfallsteuermodul (202) zu senden, das zweite Gewicht an die Mikronetzsteuerung (203) zu senden und das dritte Gewicht an das Blindspannungs-Differentialabfall-Steuerungsmodul (204) zu senden, wobei das erste Leistungskonditionierungssystem ein beliebiges der Vielzahl von Leistungskonditionierungssystemen ist;
das Blindspannungsabfallsteuermodul (202) ferner dazu konfiguriert ist: einen Spannungswert der Ausgangsspannung des ersten Leistungskonditionierungssystems zu sammeln; und einen ersten Referenzwert einer Leistung des ersten Leistungskonditionierungssystems basierend auf dem Spannungswert der Ausgangsspannung des ersten Leistungskonditionierungssystems und dem ersten Gewicht zu bestimmen;
die Mikronetzsteuerung (203) ferner dazu konfiguriert ist: einen Spannungswert einer Ausgangsspannung der Sammelschiene (206) zu sammeln; und einen zweiten Referenzwert der Leistung des ersten Leistungskonditionierungssystems basierend auf dem Spannungswert der Ausgangsspannung der Sammelschiene (206) und dem zweiten Gewicht zu bestimmen;
das Blindspannungs-Differentialabfall-Steuermodul (204) ferner dazu konfiguriert ist: den Spannungswert der Ausgangsspannung des ersten Leistungskonditionierungssystems zu sammeln und eine Spannungswertänderungsrate der Ausgangsspannung des ersten Leistungskonditionierungssystems basierend auf Spannungswerten zu bestimmen, die von der Ausgangsspannung des ersten Leistungskonditionierungssystems stammen und die zu unterschiedlichen Zeitpunkten gesammelt werden; und einen dritten Referenzwert der Leistung des ersten Leistungskonditionierungssystems basierend auf der Spannungswertänderungsrate und dem dritten Gewicht zu bestimmen; und
die Leistungskonditionierungssystemsteuerung (201) ferner dazu konfiguriert ist, einen Wert der Leistung des ersten Leistungskonditionierungssystems basierend auf dem ersten Referenzwert, dem zweiten Referenzwert und dem dritten Referenzwert zu bestimmen.

2. Vorrichtung nach Anspruch 1, wobei die Leistungskonditionierungssystemsteuerung (201) ein virtuelles Erregermodul (201-1), ein Spannungssteuermodul (201-2) und ein signalgesteuertes Modul (201-3) umfasst und das Spannungssteuermodul (201-2) separat mit dem virtuellen Erregermodul (201-2) und dem signalgesteuerten Modul (201-3) verbunden ist;
das virtuelle Erregermodul (201-2) dazu konfiguriert ist: einen vierten Referenzwert der Leistung des ersten Leistungskonditionierungssystems basierend auf dem ersten Referenzwert, dem zweiten Referenzwert und dem dritten Referenzwert zu bestimmen; und einen Amplitudenspannungsreferenzwert des ersten Leistungskonditionierungssystems basierend auf dem vierten Referenzwert zu bestimmen;
das Spannungssteuermodul (201-2) dazu konfiguriert ist, ein Pulsweitenmodulationssignal basierend auf dem Amplitudenspannungsreferenzwert des ersten Leistungskonditionierungssystems zu bestimmen; und
das signalgesteuerte Modul (201-3) dazu konfiguriert ist, den Wert der Leistung des ersten Leistungskonditionierungssystems basierend auf dem Pulsweitenmodulationssignal zu bestimmen.

3. Vorrichtung nach Anspruch 1 oder 2, wobei, wenn sich das erste Leistungskonditionierungssystem in einem Übergangszustand befindet, das dritte Gewicht größer als das erste Gewicht ist und das erste Gewicht größer als das zweite Gewicht ist.

4. Vorrichtung nach einem der Ansprüche 1 bis 3, wobei, wenn sich das erste Leistungskonditionierungssystem in einem stationären Zustand befindet, das zweite Gewicht größer als das dritte Gewicht ist und das dritte Gewicht größer als das erste Gewicht ist.

5. Vorrichtung nach einem der Ansprüche 1 bis 4, wobei die Vorrichtung ferner eine Spannungsbereitstellungseinheit (2012) umfasst und die Spannungsbereitstellungseinheit (2012) separat mit dem Blindspannungsabfallsteuermodul (202) und der Mikronetzsteuerung (203) verbunden ist; und
die Spannungsbereitstellungseinheit (2012) dazu konfiguriert ist, eine Spannung für das Blindspannungsabfallsteuermodul (202) und/oder die Mikronetzsteuerung (203) bereitzustellen.

6. Vorrichtung nach Anspruch 5, wobei das Blindspannungsabfallsteuermodul (202) eine erste Abtasteinheit (202-1) und eine erste Berechnungseinheit (202-3) umfasst;
die erste Abtasteinheit (202-1) dazu konfiguriert ist, den Spannungswert der Ausgangsspannung des ersten Leistungskonditionierungssystems zu sammeln; und
die erste Berechnungseinheit (202-3) dazu konfiguriert ist: einen ersten Spannungswert der von der Spannungsbereitstellungseinheit (2012) bereitgestellten Spannung zu erlangen; einen zweiten Spannungswert basierend auf dem Spannungswert der Ausgangsspannung des ersten Leistungskonditionierungssystems und dem ersten Spannungswert zu bestimmen; und den ersten Referenzwert der Leistung des ersten Leistungskonditionierungssystems basierend auf dem zweiten Spannungswert und dem ersten Gewicht zu bestimmen.

7. Vorrichtung nach Anspruch 5 oder 6, wobei die Mikronetzsteuerung (203) eine zweite Abtasteinheit (203-1) und eine zweite Berechnungseinheit (203-3) umfasst;
die zweite Abtasteinheit (203-1) dazu konfiguriert ist, den Spannungswert der Ausgangsspannung der Sammelschiene (206) zu sammeln; und
die zweite Berechnungseinheit (203-3) dazu konfiguriert ist:
einen dritten Spannungswert der von der Spannungsbereitstellungseinheit (2012) bereitgestellten Spannung zu erlangen; einen vierten Spannungswert basierend auf dem Spannungswert der Ausgangsspannung der Sammelschiene (206) und dem dritten Spannungswert zu bestimmen; und den zweiten Referenzwert der Leistung des ersten Leistungskonditionierungssystems basierend auf dem vierten Spannungswert und dem zweiten Gewicht zu bestimmen.

8. Leistungszuweisungsverfahren für eine Leistungskonditionierungssystemsteuerung (201) in einer Leistungszuweisungsvorrichtung (200) nach einem der Ansprüche 1 bis 7, wobei das Verfahren Folgendes umfasst:
Bestimmen (701) eines ersten Gewichts, eines zweiten Gewichts und eines dritten Gewichts basierend auf einer Ausgangsspannung und einem Ausgangsstrom eines ersten Leistungskonditionierungssystems, wobei das erste Gewicht, das zweite Gewicht und das dritte Gewicht basierend auf einem Parameter bestimmt wird, der einen Fehlerwert der Blindleistung des ersten Leistungskonditionierungssystems misst; und Senden des ersten Gewichts an ein Blindspannungsabfallsteuermodul (202) in der Leistungszuweisungsvorrichtung (200), Senden des zweiten Gewichts an eine Mikronetzsteuerung (203) in der Leistungszuweisungsvorrichtung (200) und Senden des dritten Gewichts an ein Blindspannungs-Differentialabfall-Steuermodul (204) in der Leistungszuweisungsvorrichtung (200);
Empfangen (702) eines ersten Referenzwertes einer Leistung des ersten Leistungskonditionierungssystems von dem Blindspannungsabfallsteuermodul (202), Empfangen eines zweiten Referenzwertes der Leistung des ersten Leistungskonditionierungssystems von der Mikronetzsteuerung (203) und Empfangen eines dritten Referenzwertes der Leistung des ersten Leistungskonditionierungssystems von dem Blindspannungs-Differentialabfall-Steuermodul (204); und
Bestimmen (703) eines Wertes der Leistung des ersten Leistungskonditionierungssystems basierend auf dem ersten Referenzwert, dem zweiten Referenzwert und dem dritten Referenzwert.

9. Verfahren nach Anspruch 8, wobei das Bestimmen eines Wertes der Leistung des ersten Leistungskonditionierungssystems basierend auf dem ersten Referenzwert, dem zweiten Referenzwert und dem dritten Referenzwert Folgendes umfasst:
Bestimmen eines vierten Referenzwertes der Leistung des ersten Leistungskonditionierungssystems basierend auf dem ersten Referenzwert, dem zweiten Referenzwert und dem dritten Referenzwert; und Bestimmen eines Amplitudenspannungsreferenzwertes des ersten Leistungskonditionierungssystems basierend auf dem vierten Referenzwert;
Bestimmen eines Pulsweitenmodulationssignals basierend auf dem Amplitudenspannungsreferenzwert des ersten Leistungskonditionierungssystems; und
Bestimmen des Wertes der Leistung des ersten Leistungskonditionierungssystems basierend auf dem Pulsweitenmodulationssignal.

10. Verfahren nach Anspruch 8 oder 9, wobei, wenn sich das erste Leistungskonditionierungssystem in einem Übergangszustand befindet, das dritte Gewicht größer als das erste Gewicht ist und das erste Gewicht größer als das zweite Gewicht ist.

11. Verfahren nach einem der Ansprüche 8 bis 10, wobei, wenn sich das erste Leistungskonditionierungssystem in einem stationären Zustand befindet, das zweite Gewicht größer als das dritte Gewicht ist und das dritte Gewicht größer als das erste Gewicht ist.

## Revendications

1. Appareil d'attribution de puissance (200) pour une pluralité de systèmes de conditionnement de puissance (205), dans lequel chacun de la pluralité de systèmes de conditionnement de puissance est connecté à une barre omnibus (206), et l'appareil comprend un module de commande de chute de tension réactive (202), un dispositif de commande de micro-réseau (203), un module de commande de chute différentielle de tension réactive (204) et un dispositif de commande de système de conditionnement de puissance (201) ;
dans lequel le module de commande de chute de tension réactive (202) et le dispositif de commande de système de conditionnement de puissance (201) sont chacun configurés pour se connecter à chaque système de conditionnement de puissance, le dispositif de commande de micro-réseau (203) est configuré pour se connecter à la barre omnibus (206), et le dispositif de commande de système de conditionnement de puissance (201) est configuré pour se connecter séparément au module de commande de chute de tension réactive (202), au dispositif de commande de micro-réseau (203) et au module de commande de chute différentielle de tension réactive (204) ;
Le dispositif de commande de système de conditionnement de puissance (201) est également configuré pour : déterminer un premier poids, un deuxième poids et un troisième poids sur la base d'une tension de sortie et d'un courant de sortie d'un premier système de conditionnement de puissance, dans lequel le premier poids, le deuxième poids et le troisième poids sont déterminés sur la base d'un paramètre λ mesurant une valeur d'erreur de la puissance réactive du premier système de conditionnement de puissance ; et envoyer le premier poids au module de commande de chute de tension réactive (202), envoyer le deuxième poids au dispositif de commande de micro-réseau (203) et envoyer le troisième poids au module de commande de chute différentielle de tension réactive (204), dans lequel le premier système de conditionnement de puissance est l'un quelconque de la pluralité de systèmes de conditionnement de puissance ;
le module de commande de chute de tension réactive (202) est également configuré pour : collecter une valeur de tension de la tension de sortie du premier système de conditionnement de puissance ; et déterminer une première valeur de référence d'une puissance du premier système de conditionnement de puissance sur la base de la valeur de tension de la tension de sortie du premier système de conditionnement de puissance et du premier poids ;
le dispositif de commande de micro-réseau (203) est également configuré pour : collecter une valeur de tension d'une tension de sortie de la barre omnibus (206) ; et déterminer une deuxième valeur de référence de la puissance du premier système de conditionnement de puissance sur la base de la valeur de tension de la tension de sortie de la barre omnibus (206) et du deuxième poids ;
le module de commande de chute différentielle de tension réactive (204) est également configuré pour : collecter la valeur de tension de la tension de sortie du premier système de conditionnement de puissance, et déterminer un taux de changement de valeur de tension de la tension de sortie du premier système de conditionnement de puissance sur la base de valeurs de tension qui sont de la tension de sortie du premier système de conditionnement de puissance et qui sont collectées à différents moments ; et déterminer une troisième valeur de référence de la puissance du premier système de conditionnement de puissance sur la base du taux de changement de valeur de tension et du troisième poids ; et
le dispositif de commande de système de conditionnement de puissance (201) est également configuré pour déterminer une valeur de la puissance du premier système de conditionnement de puissance sur la base de la première valeur de référence, de la deuxième valeur de référence et de la troisième valeur de référence.

2. Appareil selon la revendication 1, dans lequel le dispositif de commande de système de conditionnement de puissance (201) comprend un module d'excitation virtuelle (201-1), un module de commande de tension (201-2) et un module piloté par signal (201-3), et le module de commande de tension (201-2) est connecté séparément au module d'excitation virtuelle (201-2) et au module piloté par signal (201-3) ;
Le module d'excitation virtuelle (201-2) est configuré pour :
déterminer une quatrième valeur de référence de la puissance du premier système de conditionnement de puissance sur la base de la première valeur de référence, de la deuxième valeur de référence et de la troisième valeur de référence ; et déterminer une valeur de référence de tension d'amplitude du premier système de conditionnement de puissance sur la base de la quatrième valeur de référence ;
le module de commande de tension (201-2) est configuré pour déterminer un signal de modulation de largeur d'impulsion sur la base de la valeur de référence de tension d'amplitude du premier système de conditionnement de puissance ; et
le module piloté par signal (201-3) est configuré pour déterminer la valeur de la puissance du premier système de conditionnement de puissance sur la base du signal de modulation de largeur d'impulsion.

3. Appareil selon la revendication 1 ou 2, dans lequel lorsque le premier système de conditionnement de puissance est dans un état transitoire, le troisième poids est supérieur au premier poids, et le premier poids est supérieur au deuxième poids.

4. Appareil selon l'une quelconque des revendications 1 à 3, dans lequel lorsque le premier système de conditionnement de puissance est dans un état stable, le deuxième poids est supérieur au troisième poids, et le troisième poids est supérieur au premier poids.

5. Appareil selon l'une quelconque des revendications 1 à 4, dans lequel l'appareil comprend également une unité de fourniture de tension (2012), et l'unité de fourniture de tension (2012) est connectée séparément au module de commande de chute de tension réactive (202) et au dispositif de commande de micro-réseau (203) ; et
l'unité de fourniture de tension (2012) est configurée pour fournir une tension au module de commande de chute de tension réactive (202) et/ou au dispositif de commande de micro-réseau (203) .

6. Appareil selon la revendication 5, dans lequel le module de commande de chute de tension réactive (202) comprend une première unité d'échantillonnage (202-1) et une première unité de calcul (202-3) ;
la première unité d'échantillonnage (202-1) est configurée pour collecter la valeur de tension de la tension de sortie du premier système de conditionnement de puissance ; et
la première unité de calcul (202-3) est configurée pour : obtenir une première valeur de tension de la tension fournie par l'unité de fourniture de tension (2012) ; déterminer une deuxième valeur de tension sur la base de la valeur de tension de la tension de sortie du premier système de conditionnement de puissance et de la première valeur de tension ; et déterminer la première valeur de référence de la puissance du premier système de conditionnement de puissance sur la base de la deuxième valeur de tension et du premier poids.

7. Appareil selon la revendication 5 ou 6, dans lequel le dispositif de commande de micro-réseau (203) comprend une seconde unité d'échantillonnage (203-1) et une seconde unité de calcul (203-3) ;
la seconde unité d'échantillonnage (203-1) est configurée pour collecter la valeur de tension de la tension de sortie de la barre omnibus (206) ; et
la seconde unité de calcul (203-3) est configurée pour : obtenir une troisième valeur de tension de la tension fournie par l'unité de fourniture de tension (2012) ; déterminer une quatrième valeur de tension sur la base de la valeur de tension de la tension de sortie de la barre omnibus (206) et de la troisième valeur de tension ; et déterminer la deuxième valeur de référence de la puissance du premier système de conditionnement de puissance sur la base de la quatrième valeur de tension et du deuxième poids.

8. Procédé d'attribution de puissance pour un dispositif de commande de système de conditionnement de puissance (201) dans un appareil d'attribution de puissance (200) selon l'une quelconque des revendications 1 à 7, et le procédé comprend :
la détermination (701) d'un premier poids, d'un deuxième poids et d'un troisième poids sur la base d'une tension de sortie et d'un courant de sortie d'un premier système de conditionnement de puissance, dans lequel le premier poids, le deuxième poids et le troisième poids sont déterminés sur la base d'un paramètre mesurant une valeur d'erreur de la puissance réactive du premier système de conditionnement de puissance ; et l'envoi du premier poids à un module de commande de chute de tension réactive (202) dans l'appareil d'attribution de puissance (200), l'envoi du deuxième poids à un dispositif de commande de micro-réseau (203) dans l'appareil d'attribution de puissance (200), et l'envoi du troisième poids à un module de commande de chute différentielle de tension réactive (204) dans l'appareil d'attribution de puissance (200) ;
la réception (702) d'une première valeur de référence d'une puissance du premier système de conditionnement de puissance à partir du module de commande de chute de tension réactive (202), la réception d'une deuxième valeur de référence de la puissance du premier système de conditionnement de puissance à partir du dispositif de commande de micro-réseau (203), et la réception d'une troisième valeur de référence de la puissance du premier système de conditionnement de puissance à partir du module de commande de chute différentielle de tension réactive (204) ; et
la détermination (703) d'une valeur de la puissance du premier système de conditionnement de puissance sur la base de la première valeur de référence, de la deuxième valeur de référence et de la troisième valeur de référence.

9. Procédé selon la revendication 8, dans lequel la détermination d'une valeur de la puissance du premier système de conditionnement de puissance sur la base de la première valeur de référence, de la deuxième valeur de référence et de la troisième valeur de référence comprend :
la détermination d'une quatrième valeur de référence de la puissance du premier système de conditionnement de puissance sur la base de la première valeur de référence, de la deuxième valeur de référence et de la troisième valeur de référence ; et la détermination d'une valeur de référence de tension d'amplitude du premier système de conditionnement de puissance sur la base de la quatrième valeur de référence ;
la détermination d'un signal de modulation de largeur d'impulsion sur la base de la valeur de référence de tension d'amplitude du premier système de conditionnement de puissance ; et
la détermination de la valeur de la puissance du premier système de conditionnement de puissance sur la base du signal de modulation de largeur d'impulsion.

10. Procédé selon la revendication 8 ou 9, dans lequel lorsque le premier système de conditionnement de puissance est dans un état transitoire, le troisième poids est supérieur au premier poids, et le premier poids est supérieur au deuxième poids.

11. Procédé selon l'une quelconque des revendications 8 à 10, dans lequel lorsque le premier système de conditionnement de puissance est dans un état stable, le deuxième poids est supérieur au troisième poids, et le troisième poids est supérieur au premier poids.
